# EUROPEAN PATENT APPLICATION

(11) **EP 3 840 231 A1**
(43) Date of publication of application: **23.06.2021**
(21) Application number: 19217412.6
(22) Date of filing: 18.12.2019
(51) Int. Cl.: H04B 1/04, H04K 3/00

(54) **NETWORK CONTROL UNIT WITH NOISE GENERATION UNIT AND ASSOCIATED CONTROLLER AND AIRCRAFT COMPRISING SUCH NETWORK CONTROL UNIT**

(71) Applicant: Atos Convergence Creators GmbH, 1210 Wien (AT)
(72) Inventor: HALLA, Markus, 1210 Vienna (AT); KAUER, Christian, 1210 Vienna (AT); DANZER, Hermann, 1210 Vienna (AT); TUPPA, Walter, 1210 Vienna (AT)
(74) Representative: IPAZ

(57) **Abstract**

This network control unit comprises: - a noise generation unit (102) for generating low power noise signals (s1, s2, s3) in respective frequency bands; - a noise generation unit controller (112) for controlling the noise generation unit (102); - power amplifiers (104A, 104B, 104C) for respectively amplifying the low power noise signals (s1, s2, s3) into noise signals (S1, S2, S3); and - a multi-band combiner (106) designed for summing the noise signals (S1, S2, S3) into a single output signal (Sₒ) to be provided to an antenna (109).

The network control unit (100) further comprises a single printed circuit board (116) mechanically supporting and electrically connecting electrical components implementing the noise generation unit (102) and the noise generation unit controller (112).

## Description

The invention relates to a network control unit with noise generation unit and associated controller and an aircraft comprising such a network control unit.

The invention applies more particularly to a network control unit comprising:
- a noise generation unit for generating low power noise signals in respective frequency bands;
- a noise generation unit controller for controlling the noise generation unit;
- power amplifiers for respectively amplifying the low power noise signals into noise signals; and
- a multi-band combiner designed for summing the noise signals into a single output signal to be provided to an antenna.

A network control unit (NCU) is used in aircrafts to mask cellular ground base transceiver stations from passenger equipment like cell phones, transmitting personal electronic devices, etc. To achieve this, the NCU emits noise signals on different frequency bands used by the cellular ground base transceiver stations.

In known NCU, the noise generation unit and the noise generation unit controller is physically separated on two respective printed circuit boards. This separation allows achieving high reliability, which was a requirement for every device intended to be used in an aircraft.

However, a drawback of this separation is an increase weight, dimension and power consumption of the NCU.

An object of the invention is therefore a network control unit comprising:
- a noise generation unit for generating low power noise signals in respective frequency bands;
- a noise generation unit controller for controlling the noise generation unit;
- power amplifiers for respectively amplifying the low power noise signals into noise signals; and
- a multi-band combiner designed for summing the noise signals into a single output signal to be provided to an antenna;
characterized in that the network control unit further comprises a single printed circuit board mechanically supporting and electrically connecting electrical components implementing the noise generation unit and the noise generation unit controller.

Thanks to the invention, both the noise generation unit and the noise generation unit controller are implemented on the same printed circuit board. This is possible because the reliability requirements for NCU in an aircraft have been reduced.

Optionally, the electrical components comprise a system on a chip.

Also optionally, the system on a chip comprises a central processing unit and memory accessible by the central processing unit, the central processing unit being designed to execute computer program code present in the memory, for carrying out functions of the noise generation unit and/or the noise generation unit controller.

Also optionally, the electrical components further implement a communication controller.

Also optionally, the central processing unit being is further designed to execute computer program code present in the memory, for carrying out functions of the communication controller.

Also optionally, the noise generation unit is designed for generating the low power noise signals in at least one of the following frequency bands: 728 - 844 MHz, 925 - 960 MHz and 2110 - 2170 MHz.

Another object of the invention is an aircraft comprising a network control unit according to the invention.

The invention will be better understood with the aid of the description which follows, given solely by way of example and with reference to the appended drawings, in which:

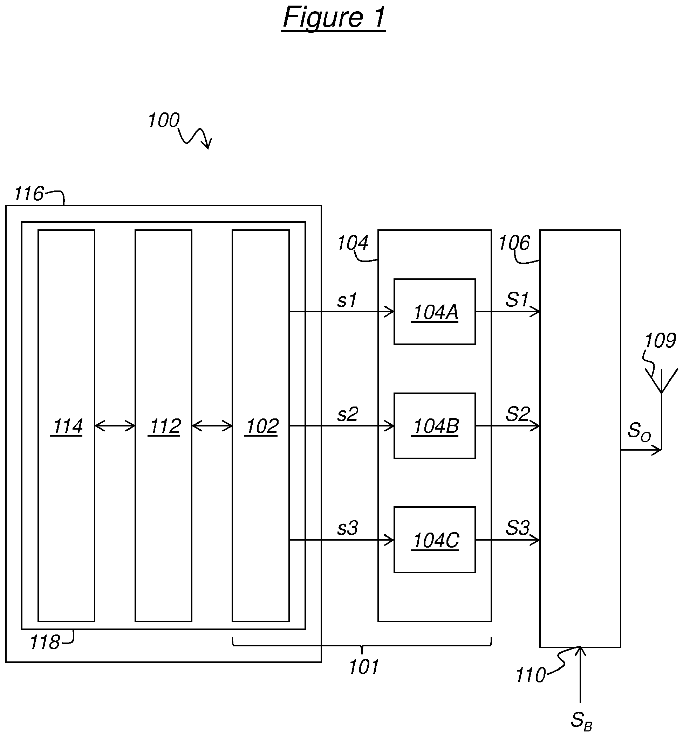

[Fig.1] figure 1 diagrammatically shows the overall structure of a network control unit according to the invention.

Referring to figure 1, an example of network control unit (NCU) 100 for an aircraft, according to the invention will now be described.

The NCU 100 comprises a noise generation system 101 for generating noise signals S1, S2, S3 in respective frequency bands.

The noise generation system 101 comprises a digital noise generation unit 102 for generating low power noise signals s1, s2, s3 in the respective frequency bands. In the described example, the digital noise generation unit 102 is designed for generating three low power noise signals s1, s2, s3 in respectively the three following frequency bands: (NB700) 728 - 844 MHz, (NB900) 925 - 960 MHz and (NB2100) 2110 - 2170 MHz. It will be noted that these frequency bands are each wideband, that is to say that they each extend over more than 20 MHz. It will also be noted that at least one frequency band extends over more than 100 MHz.

The digital noise generation unit 102 is for example as described in patent US 8 159 280 B2.

The noise generation system 101 further comprises a power amplifier stage 104 comprising power amplifiers 104A, 104B, 104C for respectively amplifying the low power noise signals s1, s2, s3 in order to provide the noise signals S1, S2, S3.

Each power amplifier 104A, 104B, 104C is designed to provide a predefined amplification factor over the whole respective frequency band. For example, the power amplifier 104A is designed to provide a predefined amplification factor over the frequency band (NB700) 728 - 844 MHz. Because the frequency bands are wideband, the power amplifiers 104A, 104B, 104C are wideband amplifiers.

The NCU 100 further comprises a multi-band combiner 106 connected to the outputs of the power amplifiers 104A, 104B, 104C and designed for filtering and summing the noise signals S1, S2, S3 and, optionally, a base signal S_{B} provided for example by a base transceiver station (BTS), a node or a enode of the aircraft, into a single output signal S_{O} to be provided to an antenna 109. In order to receive the base signal S_{B}, the multi-band combiner 106 comprises an input 110.

The NCU 100 further comprises a noise generation controller 112 designed for controlling the digital noise generation unit 102.

The NCU 100 further comprises a communication controller 114 designed for (i) receiving server commands from a server of the aircraft, (ii) acknowledging the server commands to the aircraft server and sending back status information to the aircraft server if requested by the server commands, and (iii) sending noise generation commands to the noise generation controller 112 according to the server commands. For example, the noise generation commands indicate which of the frequency bands (i.e. in the described example (NB700), (NB900) and (NB2100)) power amplifiers 104A, 104B, 104C must be switched off and switched on, and in the latter case a frequency and power level to be switched on.

Preferably, the communication is always started by the aircraft server. The communication controller is designed to not send automatic messages to the aircraft server.

In the described example, the noise generation controller 112 is designed, after receiving the noise generation commands, for calculating a noise pattern from the noise generation commands, storing it in a memory and configuring hardware components of the digital noise generation unit 102 in order to carry out the noise pattern.

The NCU 100 further comprises a single printed circuit board (PCB) 116 mechanically supporting and electrically connecting electrical components using conductive tracks, such that these electrical components implement the controllers 112, 114 and the digital noise generation unit 102. In the described example, the electrical components comprise a system on a chip (SoC) 118, which is an integrated circuit (also known as a "chip") that integrates a central processing unit, memory accessible by the central processing unit and input/output ports. The SoC can also integrate a secondary storage that is for example non-volatile. The central processing unit is designed to execute computer program code present in the memory, for carrying out the functions of one or several of the digital noise generation unit 102 and the first and controllers 112, 114.

In the described example, the central processing unit comprises at least one core, such as an Advanced RISC Machine (ARM) core. In the described example, the central processing unit comprises two cores. The central processing unit further comprises a programmable logic part. The core(s) and programmable logic part are in one chip.

For example, since nowadays the complete NCU functionality is categorized at DAL (Design Assurance Level) level D, only a first of the two cores is used for implementing both controllers 112, 114. In this manner, both the communication control and the noise generation control functionality are running on the same core. A programmable logic part of the SoC 118 is for example used to store the noise pattern and provide a glue logic to control the hardware components of the digital noise generation unit 102. The second of the two cores is for example inactive. Alternatively, if separation of the controls is needed, for example if the DAL is increased, the second core can be configured to implement one of the two controllers 112, 114, while the first core continue to implement the other of the two controllers 112, 114.

It is clear that a network control unit such as described above allows decreasing increase weight, dimension and power consumption of the NCU.

It should also be noted that the invention is not limited to the embodiments and alternatives described hereinabove. More specifically, one of ordinary skill in the art will realize that various modifications can be provided to the embodiments and alternatives described hereinabove, using the information disclosed herein. In the following claims, the terms used must not be interpreted as limiting the claims to the embodiments presented in this description, however must be interpreted to include all equivalents that the claims intend to cover via their formulation and the prediction of which is within reach of one of ordinary skill in the art when applying their general knowledge to the implementation of the information disclosed herein.

## Claims

1. Network control unit (100) comprising:
- a noise generation unit (102) for generating low power noise signals (s1, s2, s3) in respective frequency bands;
- a noise generation unit controller (112) for controlling the noise generation unit (102);
- power amplifiers (104A, 104B, 104C) for respectively amplifying the low power noise signals (s1, s2, s3) into noise signals (S1, S2, S3); and
- a multi-band combiner (106) designed for summing the noise signals (S1, S2, S3) into a single output signal (So) to be provided to an antenna (109);
**characterized in that** the network control unit (100) further comprises a single printed circuit board (116) mechanically supporting and electrically connecting electrical components implementing the noise generation unit (102) and the noise generation unit controller (112).

2. Network control unit (100) according to claim 1, wherein the electrical components comprise a system on a chip (118).

3. Network control unit (100) according to claim 2, wherein the system on a chip (118) comprises a central processing unit and memory accessible by the central processing unit, the central processing unit being designed to execute computer program code present in the memory, for carrying out functions of the noise generation unit (102) and/or the noise generation unit controller (112).

4. Network control unit (100) according to any of claims 1 to 3, wherein the electrical components further implement a communication controller (114).

5. Network control unit (100) according to claims 3 and 4, wherein the central processing unit being is further designed to execute computer program code present in the memory, for carrying out functions of the communication controller (114).

6. Network control unit (100) according to any of claims 1 to 5, wherein the noise generation unit (102) is designed for generating the low power noise signals (s1, s2, s3) in at least one of the following frequency bands: 728 - 844 MHz, 925 - 960 MHz and 2110 - 2170 MHz.

7. Aircraft comprising a network control unit (100) according to any of claims 1 to 6.
